# EUROPEAN PATENT SPECIFICATION

(11) **EP 3 193 018 B1**
(45) Date of publication and mention of the grant of the patent: **11.03.2020**
(21) Application number: 17151530.7
(22) Date of filing: 13.01.2017
(51) Int. Cl.: F04B 39/00, F04B 39/10, F04B 39/12

(54) **IMPROVED AIR COMPRESSOR**
VERBESSERTER LUFTKOMPRESSOR
COMPRESSEUR D'AIR AMÉLIORÉ

(30) Priority: 15.01.2016 TW 105101307
(43) Date of publication of application: 19.07.2017
(73) Proprietor: Chou, Wen-San, Tainan City (TW)
(72) Inventor: Chou, Wen-San, Tainan City (TW)
(74) Representative: Lang, Christian

(56) References cited:
- US-A- 2 140 328
- US-A- 2 588 112
- US-A1- 2013 064 642
- US-A1- 2015 285 236

## Description

### (a) Technical Field of the Invention

The present invention relates to an air compressor and, more particularly, to an improved air compressor which includes a cylinder being fitted with a piston body and defining a plurality of exit holes of approximately equal dimension, so that compressed air produced in the cylinder may quickly enter an air storage container, so that the piston body can conduct reciprocating motion more smoothly and thus the performance of the air compressor can be increased.

### (b) Description of the Prior Art

Currently, an air compressor basically has a cylinder which allows a piston body to conduct reciprocating motion therein to produce compressed air which can overcome a valve mechanism, so that the compressed air can flow through an exit hole of the cylinder to enter the inner space of an air storage container or an air tank. The air storage container is provided with outlets for delivering the compressed air to an object to be inflated.

In conventional air compressors, there is only one exit hole defined at the cylinder for communicating with the air storage container. The exit hole of the cylinder is controlled by a valve mechanism, which generally includes a plug and a compression spring, so that the exit hole can be opened or closed properly according to the pressure of the compressed air. In operation, the compressed air produced in the cylinder can overcome the compressive force of the compression spring to enter the inner space of the air compressor. However, the compressed air stored in the air storage container can exert a back force on the plug, thus restraining the plug being moved away from the exit hole. As a result, the piston body, which conducts reciprocating motion in the cylinder, will be subjected to greater resistance. Therefore, the piston body may not move smoothly in the cylinder, and thus the speed of inflating an object will become slow. Furthermore, the motor of the air compressor may become too hot, thus decreasing the performance of the motor. Even worse, the motor may be under the risk of burning out.

From documents US 2013/064642 A1 and US 2 588 112 A air compressors are known using a valve plate to connect a cylinder body, in which the air is compressed, with a separate air storage container, from which the compressed air can exit the cylinder via an exit port into a compressed air tank. In order to provide an improved transfer of compressed air from the cylinder body into the air storage container both valve plates are provided with multiple exit holes, which in case of document US 2013/064642 A1 are sealed by one single resilient sheet provided with several branches to seal each exit hole individually, and in case of document US 2 588 112 A are sealed individually by separate valve structures.

In view of the foregoing, the applicant intends to develop an improved air compressor which can solve the shortcomings of conventional air compressors.

### SUMMARY OF THE INVENTION

One object of the present invention is to provide an improved air
compressor according to claim 1, wherein a cylinder thereof defines a plurality of exit holes, through which a large amount of compressed air produced in the cylinder may enter an air storage container in a short time.

Another object of the present invention is to provide an improved air compressor, wherein a cylinder thereof is fitted with a piston body and defines a plurality of exit holes of approximately equal dimension, so that a large amount of compressed air produced in the cylinder may enter an air storage container in a short time. Since the compressed air can quickly enter the air storage container, the piston body can conduct reciprocating motion more smoothly and thus the performance of the air compressor and the speed of inflating an object can be increased.

Other objects, advantages, and novel features of the present invention will become more apparent from the following detailed description when taken in conjunction with the accompanying drawings.

### BRIEF DESCRIPTION OF THE DRAWINGS

FIG. 1 shows a 3-dimensional view of an air compressor according to one embodiment of the present invention.
FIG. 2 shows an exploded view of the air compressor.
FIG. 3 shows a plan view of the air compressor, wherein a plurality of exit holes defined at a cylinder thereof are revealed.
FIG. 4 shows a plan view of the air compressor, wherein a resilient sheet being used to seal the exit holes is revealed.
FIG. 5 shows a 3-dimensional view of an air storage container used in the air compressor, wherein a plurality of columns provided at an inner surface of the air storage container are revealed.
FIG. 6 shows a plan view of the air compressor, wherein the air storage container is assembled onto the cylinder.
FIG. 7 shows a sectional view of the air compressor taken along line A-A in FIG. 6.
FIG. 8 shows a plan view of the air compressor, wherein a gear and a piston body used in the air compressor are revealed.
FIG. 9 shows an exploded view of an air compressor according to another embodiment of the present invention.

### DETAILED DESCRIPTION OF THE PREFERRED EMBODIMENTS

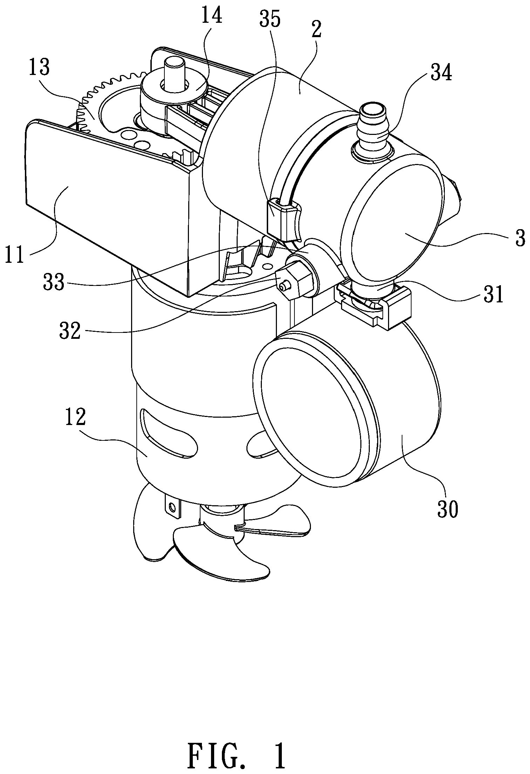

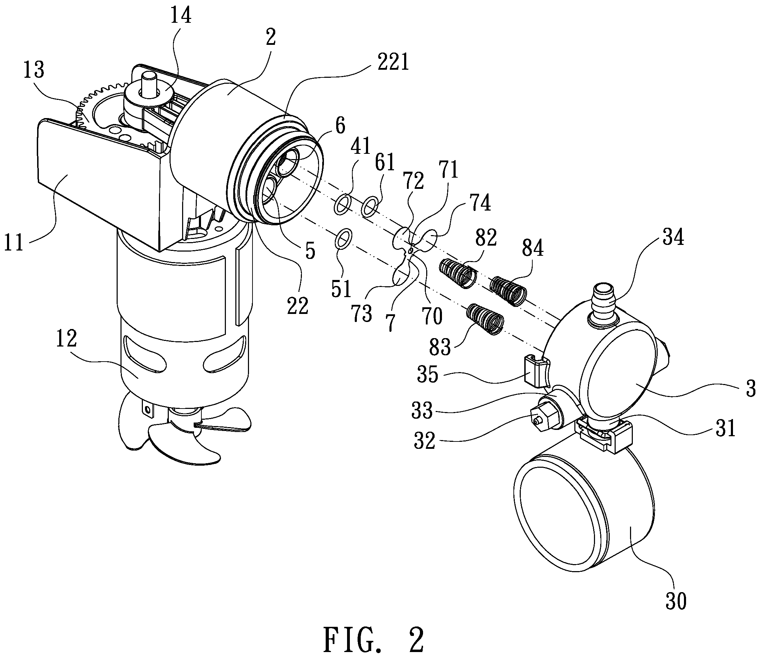

Referring to FIGS. 1 and 2, an air compressor according to one embodiment of the present invention is shown, which generally comprises a cylinder 2 fitted with a piston body 14, and a main frame 11 for mounting a motor 12 which can rotate a gear 13 to drive the piston body 14 to conduct reciprocating motion for producing compressed air in the cylinder, which may enter an air storage container 3 provided with one or more outlets for supplying air to various devices. For example, the outlet 31 can be used for connecting with a pressure gauge 30, the outlet 33 can be used for connecting with a relief valve 32, and the outlet 34 can be connected with a hose for inflating an object (not shown).

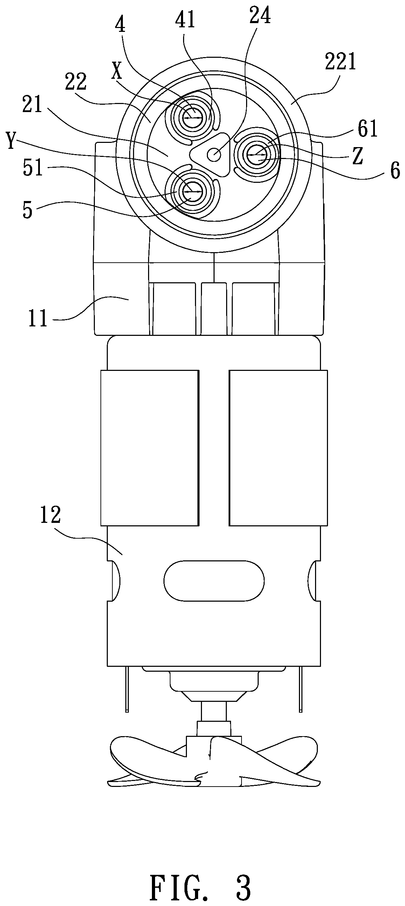

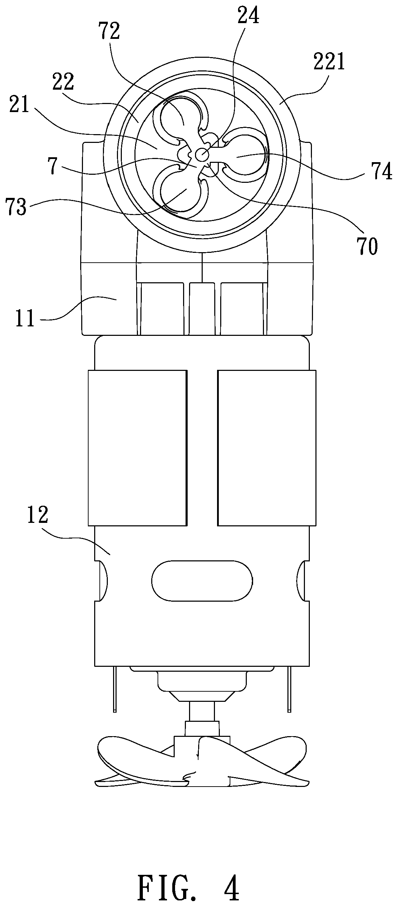

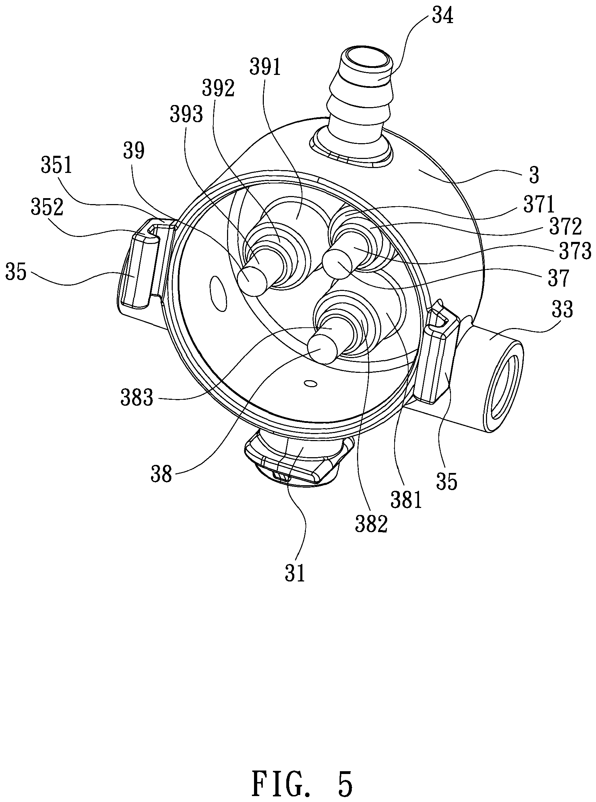

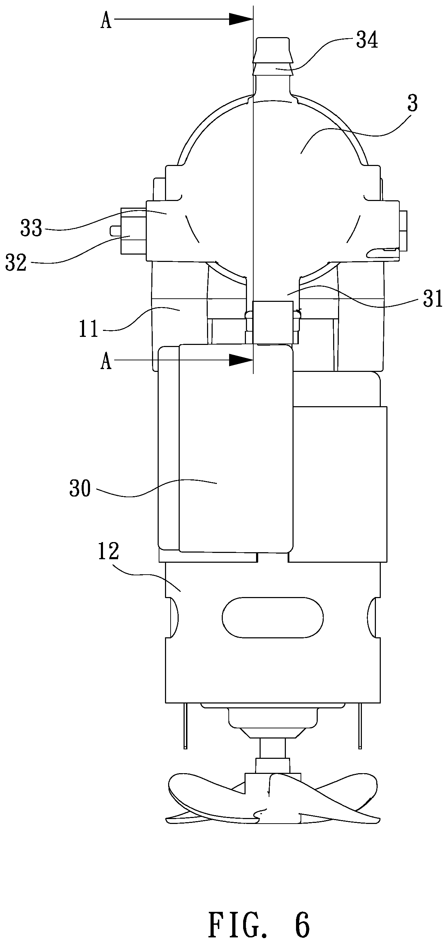

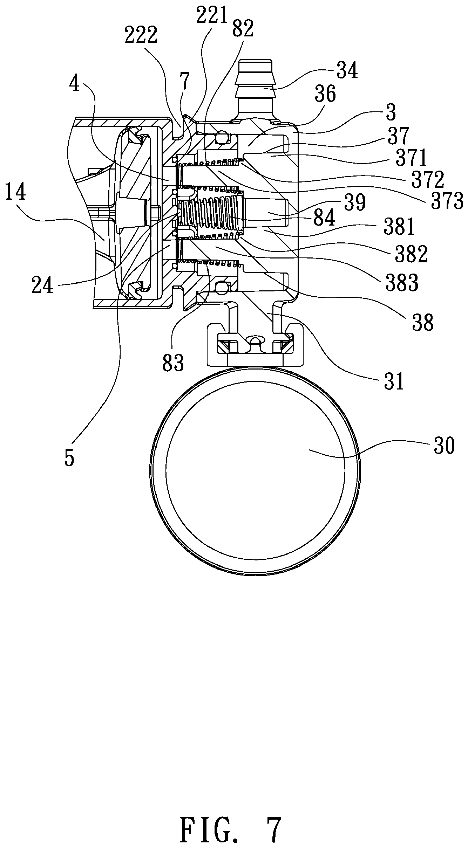

Referring to FIGS. 2 through 7, the air compressor is designed in a way different from conventional technology. The cylinder 2, which defines three exit holes 4, 5, 6 at its top wall 21, can be formed integrally with the main frame 11 by plastic material. The exit holes 4, 5, 6 are approximately equal in dimension. As shown in FIG. 3, the exit hole 4 is defined to have a diameter of (X), the exit hole 5 is defined to have a diameter of (Y), and the exit hole 6 is defined to have a diameter of (Z), wherein X = Y = Z; namely, the exit holes 4, 5, 6 have the same diameter. The exit holes 4, 5, 6 are regulated by a control mechanism to be opened or closed. The control mechanism includes a plurality of O-rings 41, 51, 61, a resilient sheet 7, and a plurality of compression springs 82, 83, 84. The O-ring 41 can be placed around the exit hole 4. The O-ring 51 can be placed around the exit hole 5. The O-ring 61 can be placed around the exit hole 6. The resilient sheet 7 has a root 70 and a plurality of branches 72, 73, 74 extending from the root 7 and corresponding to the exit holes 4, 5, 6. The root 70 of the resilient sheet 7 defines a positioning hole 71 and is attached to the top wall 21 by fitting the positioning hole 71 over a boss 24 provided on the top wall 21. The compression spring 82 can urge the branch 72 of the resilient sheet 7 against the O-ring 41 to seal the exit hole 4 (see FIGS 2, 4 and 7). The compression spring 83 can urge the branch 73 of the resilient sheet 7 against the O-ring 51 to seal the exit hole 5. The compression spring 84 can urge the branch 74 of the resilient sheet 7 against the O-ring 61 to seal the exit hole 6. The cylinder 2 has a tubular projection 22 formed on the top wall 21. The tubular projection 22 is provided with a circular flange 221 at its outer surface and defines an annular groove 222 between the circular flange 221 and the top wall 21. The air storage container 3 is provided with two opposite coupling means 35 (see FIG. 5), each of which includes a base portion 351 extending outwardly from a bottom edge of the air storage container 3, and an L-shaped holding portion 352 integrally formed at one end of the base portion 351 distal from the bottom edge of the air storage container 3. Furthermore, the air storage container 3 is provided at an inner surface thereof with a plurality of columns 37, 38, 39 corresponding to the compression springs 82, 83, 84. The column 37 has a base round portion 371, a middle round portion 372, and an end round portion 373; the column 38 has a base round portion 381, a middle round portion 382, and an end round portion 383; the column 39 has a base round portion 391, a middle round portion 392, and an end round portion 393; wherein the diameter of the base round portion 371, 381 or 391 is greater than that of the corresponding middle round portion 372, 382 or 392, and the diameter of the middle round portion 372, 382 or 392 is greater than that of the corresponding end round portion 373, 383 or 393. The L-shaped holding portions 352 of the coupling manse 35 of the air storage container 3 can be inserted into the annular groove 222 and engaged with the circular flange 221, so that the air storage container 3 can be detachably assembled onto the cylinder 2. As shown in FIG. 7, each of the compression springs 82, 83, 84 has one end forcing against the corresponding branch 72, 73 or 74 of the resilient sheet 7 and has another end being fitted around the middle round portion 372, 382 or 392 of the corresponding column and forcing against the base round portion 371, 381 or 391 of the corresponding column. Each of the end round portions 373, 383, 393 of the columns 37, 38, 39 is located at a predetermined height above the corresponding branch of the resilient sheet 7 so as to limit the movement of the corresponding branch, so that the resilient sheet 7 can be prevented from elastic fatigue.

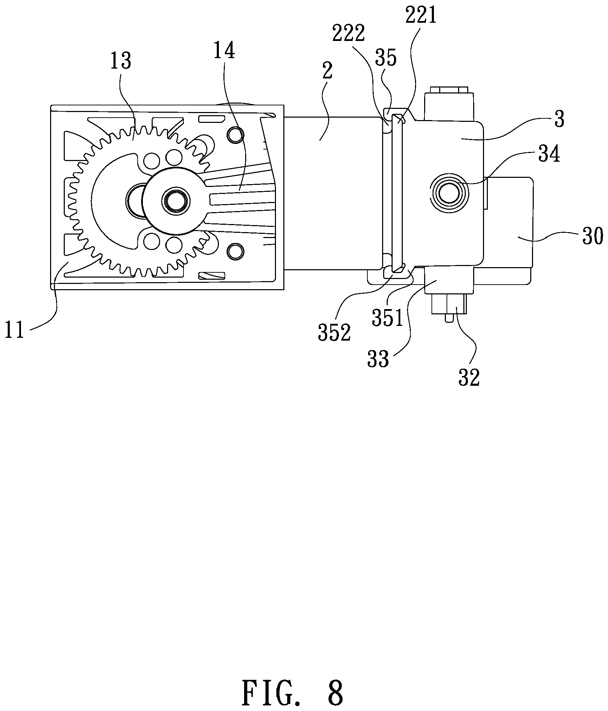

Referring to FIGS. 7 and 8, when the piston body 14 conducts reciprocating motion, the compressed air produced in the cylinder 2 can overcome the force of the compression springs 82, 83, 84 exerted on the branches 72, 73, 74 of the resilient sheet 7, thus pushing the branches 72, 73, 74 of the resilient sheet 7 away from the exit holes 4, 5, 6, respectively, so that the compressed air can flow into the inner space 36 of the air storage container 3. Initially, since the compressed air can flow into the inner space 36 of the air storage container 3 simultaneously via the exit holes 4, 5, 6, the air storage container 3 can be filled with a large amount of air in a short time. Later, since there is a large amount of air having entered the inner space 36 of the air storage container 3, the air contained in the air storage container 3 can exert a greater back force on the branches 72, 73, 74 of the resilient sheet 7 compared to the air initially contained in the air storage container 3. In other words, the piston body 14 may experience greater resistance in conducting reciprocating motion, and thus may cause the exit holes 4, 5, 6 more difficult to be opened. However, upon a decrease of the pressure of the air contained in the air storage container 3, the back force exerted on the branches 72, 73, 74 of the resilient sheet 7 will decrease and this allows the compressed air produced in the cylinder 2 to quickly enter the inner space 36 of the air storage container 3. Considering the operation of the air compressor as a whole, since the multiple exit holes allow the piston body 14 to conduct reciprocating motion more smoothly, the performance of the air compressor can be increased. Thus, the air compressor can inflate an object more quickly.

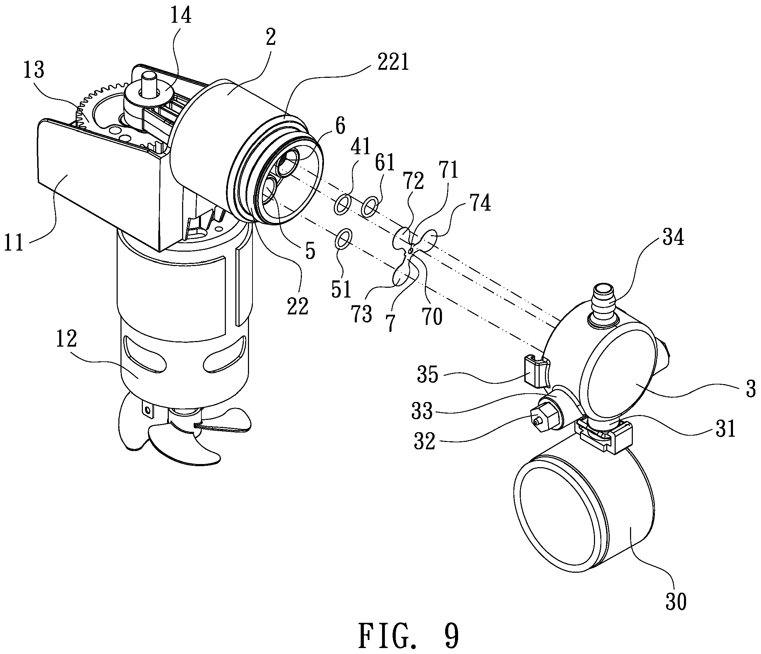

In this embodiment, as shown in FIG. 2, the branches 72, 73, 74 of the resilient sheet 7 are respectively subjected to the compressive forces of the compression springs 82, 83, 84, so that the branches 72, 73, 74 can seal the exit holes 4, 5, 6 more quickly. Nevertheless, in another embodiment, as shown in FIG. 9, the compression springs 82, 83, 84 can be dispensed with; namely, the branches 72, 73, 74 can provide compressive forces by themselves without additional springs to be in tight contact with the O-rings 41, 51, 61, thus sealing the exit holes 4, 5, 6.

As a summary, the air compressor of the present invention has a breakthrough over the prior art in that the top wall 21 of the cylinder 2 defines a plurality of exit holes 4, 5, 6, which are approximately equal in dimension and controlled by the branches 72, 73, 74 of the resilient sheet 7 to allow the compressed air produced in the cylinder 2 to quickly enter the inner space 36 of the air storage container 3, so that the piston body 14 can conduct reciprocating motion more smoothly and thus the performance of the air compressor can be increased. These features render the air compressor of the present invention useful and inventive.

## Claims

1. Air compressor including a motor (12), a gear (13), a piston body (14), a cylinder (2), an air storage container (3) and a main frame (11) for mounting the motor (12) which can rotate the gear (13) to drive the piston body (14) fitted in the cylinder (2) to conduct reciprocating motion for producing compressed air which can enter an inner space (36) of the air storage container (3); wherein
the cylinder (2) defines at a top wall (21) thereof a plurality of exit holes (4, 5, 6) of approximately equal dimension, wherein the exit holes (4, 5, 6) are regulated by a control mechanism to be opened or closed, the control mechanism including a resilient sheet (7) having a root (70) and a plurality of branches (72, 73, 74) extending from the root (70) and corresponding to the exit holes (4, 5, 6), **characterized in that** the control mechanism further includes a plurality of O-rings (41,51,61) corresponding to the exit holes (4, 5, 6), and the O-rings (41, 51, 61) being placed around the exit holes (4,5, 6) respectively, the root (70) of the resilient sheet (7) defining a positioning hole (71) and being attached to the top wall (21) by fitting the positioning hole (71) over a boss (24) provided at the top wall (21), the branches (72, 73, 74) of the resilient sheet (7) being placed in tight contact with the O-rings (41, 51, 61) to seal the exit holes (4, 5, 6), respectively.

2. The air compressor of claim 1, wherein the cylinder (2) defining the exit holes (4, 5, 6) is formed integrally with the main frame (11) by plastic material.

3. The air compressor of claim 1, wherein the exit holes (4, 5, 6) are defined to be equal in diameter.

4. The air compressor of claim 1, wherein the control mechanism includes a plurality of compression springs (82, 83, 84) corresponding to the branches (72, 73, 74) of the resilient sheet (7),the compression springs (82, 83, 84) urging the branches (72, 73, 74) of the resilient sheet (7) against the O-rings (41, 51, 61) to seal the exit holes (4, 5, 6), respectively.

5. The air compressor of claim 4, wherein the air storage container (3) is provided with two opposite coupling means (35) at a bottom edge thereof, each coupling means including a base portion (351) extending outwardly from the bottom edge of the air storage container (3), and an L-shaped holding portion (352) integrally formed at one end of the base portion (351) distal from the bottom edge of the air storage container (3).

6. The air compressor of claim 5, wherein the cylinder (2) has a tubular projection (22) formed on the top wall (21), the tubular projection (22) provided at its outer surface with a circular flange (221) and defining an annular groove (222) between the circular flange (221) and the top wall (21) for allowing the L-shaped holding portions (352) of the air storage container (3) to be inserted into the annular groove (222) and engaged with the circular flange (221); the air storage container (3) is provided at an inner surface thereof with a plurality of columns (37, 38, 39) corresponding to the branches (72, 73, 74) of the resilient sheet (7), each of the columns (37, 38, 39) having a base round portion (371, 381, 391), a middle round portion (372, 382, 392), and an end round portion (373, 383, 393); each of the compression springs has one end forcing against the corresponding branch of the resilient sheet (7), and has another end being fitted around the middle round portion of the corresponding column and forcing against the base round portion of the corresponding column, wherein each of the end round portions of the columns is located at a predetermined height above the corresponding branch of the resilient sheet (7) to limit the movement of the corresponding branch so that the resilient sheet (7) can be prevented from elastic fatigue.

## Patentansprüche

1. Luftkompressor, umfassend einen Motor (12), ein Getriebe (13), einen Kolbenkörper (14), einen Zylinder (2), einen Luftsammelbehälter (3) und einen Hauptrahmen (11) zur Befestigung des Motors (12), welcher das Getriebe (13) drehen kann, um den in dem Zylinder (2) eingebauten Kolbenkörper (14) zur Ausführung einer hin- und hergehenden Bewegung anzutreiben, um Druckluft zu erzeugen, welche in einen Innenraum (36) des Luftsammelbehälters (3) eintreten kann, wobei
der Zylinder (2) an seiner oberen Wand (21) eine Vielzahl von Austrittslöchem (4, 5, 6) mit näherungsweise gleichen Abmessungen aufweist, wobei ein Offnen oder Schließen der Austrittslöcher (4, 5, 6) durch einen Kontrollmechanismus reguliert wird, wobei der Kontrollmechanismus ein Federblatt (7) umfasst, das eine Wurzel (70) und eine Vielzahl von Zweigen (72, 73, 74) hat, welche sich von der Wurzel (70) erstrecken und mit den Austrittslöchem (4, 5, 6) korrespondieren, **dadurch gekennzeichnet, dass**
der Kontrollmechanismus ferner eine Vielzahl von O-Ringen (41, 51,61) umfasst, welche mit den Austrittslöchem (4, 5, 6) korrespondieren, wobei die O-Ringe (41, 51,61) entsprechend um die Austrittslöcher (4,5, 6) herum angeordnet sind, wobei die Wurzel (70) des Federblatts (7) ein Positionierungsloch (71) definiert und an der oberen Wand (21) angebracht ist, indem das Positionierungsloch (71) über eine Nabe (24) gesteckt ist, die an der oberen Wand (21) vorgesehen ist, wobei die Zweige (72, 73, 74) des Federblatts (7) in engem Kontakt mit den O-Ringen (41, 51,61) positioniert sind, um die Austrittslöcher (4, 5, 6) jeweils dicht zu verschließen.

2. Luftkompressor nach Anspruch 1, bei welchem der Zylinder (2), der die Austrittslöcher (4, 5,6) aufweist, integral mit dem Hauptrahmen (11) aus einem Kunststoffmaterial gefertigt ist.

3. Luftkompressor nach Anspruch 1, bei welchem die Austrittslöcher (4, 5, 6) so definiert sind, dass sie einen gleichen Durchmesser haben.

4. Luftkompressor nach Anspruch 1, bei welchem der Kontrollmechanismus eine Vielzahl von mit den Zweigen (72, 73, 74) des Federblatts (7) korrespondierenden Druckfedem (82, 83, 84) umfasst, wobei die Druckfedem (82, 83, 84) die Zweige (72,73,74) des Federblatts (7) gegen die O-Ringe (41,51,61) drücken, um die Austrittslöcher (4, 5, 6) jeweils dicht zu verschließen.

5. Luftkompressor nach Anspruch 4, bei welchem der Luftsammelbehälter (3) an seiner Unterkante mit zwei gegenüberliegenden Kopplungsmitteln (35) versehen ist, wobei jedes der Kopplungsmittel einen Basisabschnitt (351), der sich von der Unterkante des Luftsammelbehälters (3) nach außen erstreckt, und einen L-förmigen Halteabschnitt (352) umfasst, der integral an einem Ende des Basisabschnitts (351) distal von der Unterkante des Luftsammelbehälters(3) ausgebildet ist

6. Luftkompressor nach Anspruch 5, bei welchem der Zylinder (2) einen rohrförmigen Vorsprung (22) hat, der an der oberen Wand (21) ausgebildet ist, wobei der rohrförmige Vorsprung (22) an seiner Außenfläche mit einem Rundflansch (221) versehen ist und eine ringförmige Rille (222) zwischen dem Rundflansch (221) und der oberen Wand (21) definiert, um zu ermöglichen, dass die L-förmigen Halteabschnitte (352) des Luftsammelbehälters (3) in die ringförmige Rille (222) eingesetzt werden und mit dem Rundflansch (221) in Eingriff gebracht werden, wobei der Luftsammelbehälter (3) an seiner Innenfläche mit einer Vielzahl von mit den Zweigen (72,73,74) des Federblatts (7) korrespondierenden Säulen (37, 38, 39) versehen ist, wobei jede der Säulen (37, 38, 39) einen runden Basisabschnitt (371, 381, 391), einen runden Mittelabschnitt (372, 382, 392) und einen runden Endabschnitt (373, 383, 393) aufweist, wobei jede der Druckfedem ein Ende hat, welches gegen den korrespondierenden Zweig des Federblatts (7) drückt, und ein anderes Ende hat, das um den runden Mittelabschnitt der korrespondierenden Säule angebracht ist und gegen den runden Basisabschnitt der korrespondierenden Säule drückt, wobei jeder der runden Endabschnitte der Säulen in einer vorbestimmten Höhe oberhalb des korrespondierenden Zweiges des Federblatts (7) angeordnet ist, um die Bewegung des korrespondierenden Zweiges zu begrenzen, sodass eine elastische Ermüdung des Federblatts (7) verhindert werden kann.

## Revendications

1. Compresseur d'air incluant un moteur (12), un engrenage (13), un corps de piston (14), un cylindre (2), un contenant de stockage d'air (3) et un cadre principal (11) pour le montage du moteur (12) qui peut faire tourner l'engrenage (13) afin d'entraîner le corps de piston (14) inséré dans le cylindre (2) pour conduire le mouvement alternatif pour la production d'air comprimé qui peut entrer dans un espace intérieur (36) du contenant de stockage d'air (3); dans lequel
le cylindre (2) définit au niveau d'une paroi supérieure (21) de celui-ci une pluralité de trous de sortie (4, 5, 6) de dimension approximativement égale, dans lequel l'ouverture ou la fermeture des trous de sortie (4, 5, 6) est régulée par un mécanisme de commande, le mécanisme de commande incluant une feuille élastique (7) présentant une racine (70) et une pluralité de branches (72, 73, 74) s'étendant depuis la racine (70) et correspondant aux trous de sortie (4, 5, 6), **caractérisé en ce que**
le mécanisme de commande inclut en outre une pluralité de joints toriques (41, 51, 61) correspondant aux trous de sortie (4, 5, 6), et les joints toriques (41, 51, 61) étant placés autour des trous de sortie (4, 5, 6) respectivement, la racine (70) de la feuille élastique (7) définissant un trou de positionnement (71) et étant attachée à la paroi supérieure (21) par insertion du trou de positionnement (71) sur une bosse (24) prévue au niveau de la paroi supérieure (21), les branches (72, 73, 74) de la feuille élastique (7) étant placées en contact étroit avec les joints toriques (41, 51, 61) pour rendre étanche les trous de sortie (4, 5, 6) respectivement.

2. Compresseur d'air selon la revendication 1, dans lequel le cylindre (2) définissant les trous de sortie (4, 5, 6) est formé d'un seul tenant avec le cadre principal (11) par du matériau plastique.

3. Compresseur d'air selon la revendication 1, dans lequel les trous de sortie (4, 5, 6) sont définis comme étant égaux en diamètre.

4. Compresseur d'air selon la revendication 1, dans lequel le mécanisme de commande inclut une pluralité de ressorts de compression (82, 83, 84) correspondant aux branches (72, 73, 74) de la feuille élastique (7), les ressorts de compression (82, 83, 84) poussant les branches (72, 73, 74) de la feuille élastique (7) contre les joints toriques (41, 51, 61) pour rendre étanche les trous de sortie (4, 5, 6) respectivement.

5. Compresseur d'air selon la revendication 4, dans lequel le contenant de stockage d'air (3) est doté de deux moyens de couplage opposés (35) au niveau d'une arête inférieure de celui-ci, chaque moyen de couplage incluant une portion de base (351) s'étendant vers l'extérieur depuis l'arête inférieure du contenant de stockage d'air (3), et une portion de maintien en forme de L (352) formée d'un seul tenant à une extrémité de la portion de base (351) distale de l'arête inférieure du contenant de stockage d'air (3).

6. Compresseur d'air selon la revendication 5, dans lequel le cylindre (2) présente une projection tubulaire (22) formée sur la paroi supérieure (21), la projection tubulaire (22) étant dotée au niveau de sa surface extérieure d'une bride circulaire (221) et définissant une rainure annulaire (222) entre la bride circulaire (221) et la paroi supérieure (21) pour permettre aux portions de maintien en forme de L (352) du contenant de stockage d'air (3) d'être insérées dans la rainure annulaire (222) et mises en prise avec la bride circulaire (221); le contenant de stockage d'air (3) est doté au niveau d'une surface intérieure de celui-ci d'une pluralité de colonnes (37, 38, 39) correspondant aux branches (72, 73, 74) de la feuille élastique (7), chacune des colonnes (37, 38, 39) présentant une portion ronde de base (371, 381, 391), une portion ronde médiane (372, 382, 392), et une portion ronde d'extrémité (373, 383, 393); chacun des ressorts de compression présente une extrémité poussant de force contre la branche correspondante de la feuille élastique (7), et présente une autre extrémité qui est insérée autour de la portion ronde médiane de la colonne correspondante et poussant de force contre la portion ronde de base de la colonne correspondante, dans lequel chacune des portions rondes d'extrémité des colonnes est située à une hauteur prédéterminée au-dessus de la branche correspondante de la feuille élastique (7) pour limiter le mouvement de la branche correspondante de sorte que la feuille élastique (7) puisse être prévenue de toute fatigue élastique.
